(19) Europäisches Patentamt
European Patent Office
Office européen des brevets

(11) Veröffentlichungsnummer : **0 084 320**
**B1**

(12) **EUROPÄISCHE PATENTSCHRIFT**

(45) Veröffentlichungstag der Patentschrift : **28.08.85**

(21) Anmeldenummer : **83100040.1**

(22) Anmeldetag : **05.01.83**

(51) Int. Cl.⁴ : **C 07 C 87/60**, C 07 C 85/11, C 07 C143/66, C 07 D231/38, C 07 D209/40, C 09 B 29/30, C 09 B 29/40, C 09 B 29/48

(54) **4-Alkyl-2-trifluormethyl-aniline.**

(30) Priorität : **15.01.82 DE 3201112**

(43) Veröffentlichungstag der Anmeldung : **27.07.83 Patentblatt 83/30**

(45) Bekanntmachung des Hinweises auf die Patenterteilung : **28.08.85 Patentblatt 85/35**

(84) Benannte Vertragsstaaten : **CH DE FR GB LI**

(56) Entgegenhaltungen : **DE-A- 2 630 562**

(73) Patentinhaber : **BAYER AG**
**Konzernverwaltung RP Patentabteilung**
**D-5090 Leverkusen 1 Bayerwerk (DE)**

(72) Erfinder : **Marhold, Albrecht, Dr.**
**Carl-Duisberg-Strasse 329**
**D-5090 Leverkusen (DE)**
Erfinder : **Wolfrum, Gerhard, Dr.**
**Domblick 17**
**D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 084 320 B1

Jouve, 18, rue St-Denis, 75001 Paris, France

## Beschreibung

Gegenstand der Erfindung sind neue Anilinderivate der Formel

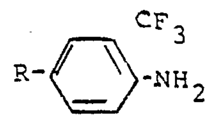

(I)

worin
R einen $C_1$-$C_6$-Alkylrest bedeutet,
sowie deren Herstellung und Verwendung zum Aufbau von Azofarbstoffen.

Während einige der isomeren 4-Trifluormethylaniline bereits bekannt sind (vgl. z. B. US 2 448 870), ist bislang kein Verfahren zur Herstellung der erfindungsgemäßen Stoffe publiziert worden.

Es wurde nun gefunden, daß man die Verbindungen der Formel I auf einfache Weise erhält, wenn man entsprechende 3-Alkylbenzotrifluoride nach an sich bekannten Methoden nitriert und anschließend die eingeführte Nitrogruppe reduziert.

Die Nitrierung erfolgt bei niederen Temperaturen (z. B. 0-20 °C) beispielsweise mit Salpetersäure oder sog. « Mischsäure ».

Die Reduktion kann mit Hilfe von Reduktionsmitteln, wie Eisen, Zinn oder Zink, oder aber katalytisch durchgeführt werden.

Von den als Ausgangsmaterialien benötigten 3-Alkylbenzotrifluoriden sind nur die einfachen Vertreter, wie z. B. die Methyl- und Ethylverbindungen bekannt (vgl. z. B. J.A.C.S. *74*, 4079 (1952) und ebenda *78*, 3393 (1956) sowie Org. Mass. Spectr. *2*, 1317 (1969)).

Die besonders interessanten verzweigten $C_3$-$C_6$-Alkylhomologen sind indessen bislang nicht in der Literatur beschrieben worden. Man erhält diese Verbindungen durch Umsetzung von Benzotrifluorid mit entsprechenden Alkenen in Gegenwart von Lewis-Säuren unter den Bedingungen der Friedel-Crafts-Synthese. Bevorzugt einzusetzende Alkene sind Propen und Buten-1.

Es wurde weiterhin gefunden, daß sich die neuen Aniline ausgezeichnet zur Herstellung von wertvollen Azofarbstoffen der Formel

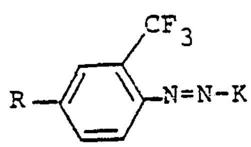

(II)

eignen, worin K den Rest einer Kupplungskomponente bedeutet.

Als Kupplungskomponenten kommen grundsätzlich alle in der Azochemie üblichen Verbindungen in Betracht, insbesondere aber solche der Anilin-, Phenol-, Naphthol-, Naphthylamin-, Pyrazol-, Indol- und Pyridinreihe.

Bevorzugte Kupplungskomponenten sind Verbindungen der Anilin-, Naphthol- und Naphthylaminreihe.

Unter diesen sind wiederum — je nach dem beabsichtigten Einsatzgebiet — die folgenden Verbindungsklassen als besonders bevorzugt hervorzuheben :

Für den sog. Wärmetransferdruck eignen sich beispielsweise insbesondere Farbstoffe auf der Basis von Kupplungskomponenten der Formel

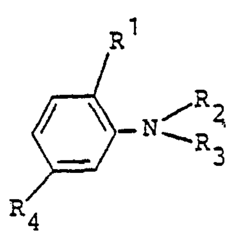

(III)

worin
$R_1$ für H, Cl, $OCH_3$ oder $OC_2H_5$,
$R_2$ für H, $C_2$-$H_4$-Alkyl, Cyanethyl, Chlorethyl, Benzyl oder $C_1$-$C_4$-Alkoxy-$C_2$-$C_4$-alkyl,
$R_3$ für gleiches oder verschiedenes $R_2$ und
$R_4$ für H, $CH_3$, $OCH_3$, $OC_2H_5$, Cl, $CF_3$ und gegebenenfalls auch $NHCOCH_3$
stehen.

Für die Herstellung von Säurefarbstoffen zum Färben von synthetischen und natürlichen Polyamiden eignen sich besonders Kupplungskomponenten der Formeln

a)

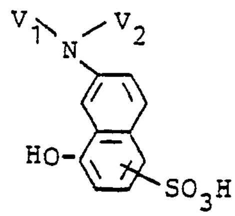

(IVa)

worin

$V_1$ für H, $C_1$-$C_4$-Alkyl, Cyclohexyl, Phenyl-$C_1$-$C_3$-alkyl oder gegebenenfalls durch $C_1$-$C_4$-(O)-Alkyl oder Cl substituiertes Phenyl und

$V_2$ für H oder $C_1$-$C_4$-Alkyl stehen.

(Bevorzuft ist die sog. Gamma-Säure).

b)

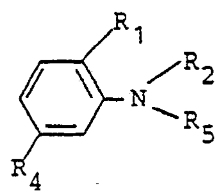

(IVb)

worin $R_1$, $R_2$ und $R_4$ die obengenannte Bedeutung hat und $R_5$ für Sulfobenzyl, Sulfoalkyl (z. B. Sulfoethyl) oder Sulfatoethyl steht und

c)

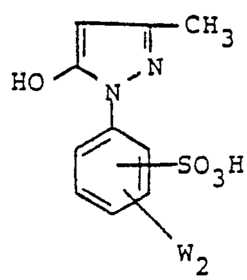

(IVc)

worin

$W_1NH_2$ oder vorzugsweise OH und

$W_2H$, Cl oder $CH_3$ bedeuten.

d)

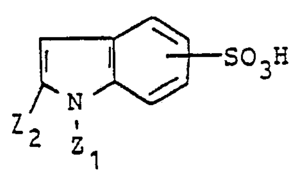

(IVd)

worin $Z_1H$ oder $C_1$-$C_4$-Alkyl und $Z_2Z_1$ oder Phenyl bedeuten.

Man erhält die neuen Farbstoffe in bekannter Weise durch Diazotierung und Kupplung (vgl. z. B. DE-OS-2 728 073, und 2 364 475).

Die neuen wasserunlöslichen und wasserlöslichen Farbstoffe auf der Basis der erfindungsgemäßen Diazokomponenten und der vorstehend genannten Kupplungskomponenten zeichnen sich durch interessante nicht vorhersehbare anwendungstechnische Eigenschaften aus.

## Beispiel 1

Darstellung von 3-Isopropylbenzotrifluorid

In einem gegen Fluorwasserstoff beständigen Autoklaven werden bei 0 °C 500 ml Fluorwasserstoff vorgelegt und eine Mischung 2 000 g Benzotrifluorid und 1 000 g Isopropylchlorid zugegeben. Nach

Aufdrücken von 3 bar Stickstoff wird für 6 Stunden bei 50 °C gerührt und der entstehende Chlorwasserstoff bei 8 bar kontinuierlich entspannt. Nach Abkühlen wird der Fluorwasserstoff abdestilliert und der Rückstand (2 430 g) durch Gaschromatographie analysiert.

Es sind enthalten :

8,6 % Isopropylchlorid
38,2 % Benzotrifluorid
24,2 % 3-Isopropylbenzotrifluorid
5,8 % 4-Isopropylbenzotrifluorid
15,3 % 3,5-Diisopropylbenzotrifluorid
6,3 % 2,5-Diisopropylbenzotrifluorid

Durch Destillation kann das gewünschte 3-Isopropylbenzotrifluorid (Kp : 53 °C/16 mbar ; $n_D^{20}$ : 1,436 0) in reiner Form isoliert werden.

In entsprechender Weise können auch andere Alkene, wie z. B. Buten-1, eingesetzt werden.

Beispiel 2

In einer Rührapparatur werden 412 g 3-Isopropyl-benzotrifluorid vorgelegt und unter kräftigen Rühren bei 10 °C 480 g Mischsäure 0 (33 % $HNO_3$ und 67 % $H_2SO_4$) zugetropft. Nach Ende der Zugabe wird noch für 1 Stunde bei 10 °C und für 2 Stunden bei 20 °C gerührt und anschließend aus 500 g Eis ausgetragen. Die organische Phase wird in Dichlormethan aufgenommen, mit Wasser gewaschen, getrocknet und über eine Kolonne destilliert.

Bei Kp : 134-35 °C/20 mbar gehen 401 g 2-Nitro-5-isopropylbenztrifluorid über ($n_D^{20}$ : 1,477 6).

Beispiel 3

In einer Hydrierapparatur werden 330 g 2-Nitro-5-isopropylbenzotrifluorid in 1 200 ml Methanol vorgelegt und 30 g Raney-Nickel zugesetzt. Nach Spülen mit Wasserstoff wird bei 25-45 °C unter einem Druck von 30 bar Wasserstoff hydriert. Nach Ende der Wasserstoffaufnahme wird die Lösung filtriert, um den Katalysator abzutrennen. Nach Abdestillieren des Lösungsmittels wird das Produkt destilliert. Man erhält 280 g 2-Amino-5-isopropylbenzotrifluorid (Kp : 95-8 °C/18 mbar, $n_D^{20}$ : 1,481 0).

Beispiel 4

In einer Rührapparatur mit Rückflußkühler und Tropftrichter werden 300 ml Wasser, 3 ml konz. Salzsäure und 100 g Eisenspäne vorgelegt. Dann werden 5 ml Dioxan zugegeben und unter Rühren auf 95 °C geheizt. Bei dieser Temperatur tropft man innerhalb einer Stunde 50 g 2-Nitro-5-isopropylbenzotrifluorid zu und rührt nach Ende der Zugabe noch für 2 Stunden nach. Anschließend wird mit Natronlauge alkalisch gestellt und das Produkt mit Wasserdampf destilliert. Man erhält 39 g 2-Amino-5-isopropylbenzotrifluorid, das mit dem Prodult aus der katalytischen Hydrierung identisch ist.

Beispiel 5

In einem Nitrierbecher werden bei 10 °C 50 g 3-Methylbenzotrifluorid vorgelegt und bei guter Durchmischung 60 g Mischsäure zugetropft. Nach Ende der Zugabe wird noch für 1 Stunde bei 10 °C und anschließend 1 Stunde bei 20 °C gerührt, auf Eis gegossen, das organische Material abgetrennt, getrocknet und destilliert. Bei Kp : 97-103 °C/14 mbar gehen 57 g 2-Nitro-5-methyl-benzotrifluorid über ($n_D^{20}$ : 1,474 3).

Beispiel 6

Analog Beispiel 5 werden 56 g 3-Ethylbenzotrifluorid mit 60 g Mischsäure nitriert. Durch Destillation werden 61 g 2-Nitro-5-ethylbenzotrifluorid (Kp : 110-113 °C/16 mbar, $n_D^{20}$ : 1,476 5) erhalten.

Beispiel 7

In einer Rührapparatur werden 100 g Eisenspäne in 300 ml Wasser, 5 ml Salzsäure und 5 ml Dioxan auf 95 °C erhitzt und in ca. 1 Stunde 57 g 2-Nitro-5-methyl-benzo-trifluorid zugetropft. Man rührt für 2 Stunden nach und destilliert dann mit Wasserdampf. Das organische Material wird mit Dichlormethan extrahiert und redestilliert. Man erhält 42 g (Kp : 92-95 °C/20 mbar) 2-Trifluormethyl-4-methyl-anilin.

Beispiel 8

Analog Beispiel 4 wurden 61 g 2-Nitro-5-ethyl-benzo-trifluorid mit Eisen reduziert. Es fielen 52 g 2-Trufluormethyl-4-ethyl-anilin (Kp : 96-8 °C/20 mbar, $n_D^{20}$ : 1,478 8) an.

Beispiel 9

20,3 g 2-Amino-5-isopropyl-benzotrifluorid werden in 350 ml Wasser und 30 ml konz. Salzsäure gelöst, auf 0 °C abgekühlt und mit der Lösung von 6,9 g Natriumnitrit in 50 ml Wasser diazotiert. Nach Zerstörung überschüssiger salpetriger Säure mit Amidosulfonsäure gibt man die Diazoniumsalzlösung zu einer auf 5 °C gekühlten Lösung von 24,2 g 6-Amino-4-hydroxynaphthalin-2-sulfonsäure (Gamma-Säure) in 300 ml Dimethylformamid, die vorher durch Zugabe von ca. 5 ml konz. Salzsäure auf pH 1 eingestellt wurde. Die Kupplung ist bei diesem pH-Wert sehr rasch beendet. Es wird 2 Stunden bei Raumtemperatur nachgerührt. Dann wird das Umsetzungsprodukt abgesaugt und getrocknet. Man erhält 44 g eines roten Pulvers der Formel

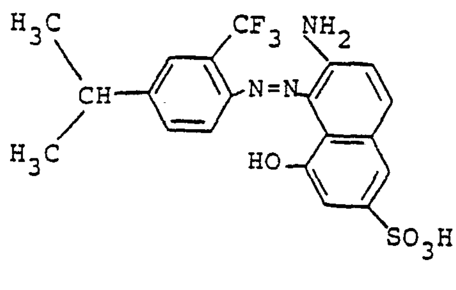

max : 524 nm (gemessen in Dimethylformamid)

das Polyamidfasern aus wäßriger Lösung in einem klaren Rot färbt. Auf Wolle erhält man damit ein klares, etwas blaustichiges Rot.

Die Farbstoffkupplung kann auch in wäßrigen Medium erfolgen. Zu diesem Zweck gibt man die nach obiger Vorschrift hergestellte Diazoniumsalzlösung zur Dispersion von 24 g 6-Amino-4-hydroxy-naphthalin-2-sulfonsäure in 600 ml Wasser und hält die Temperatur durch Kühlung bei ca. 5 °C.

Verwendet man anstelle von 24,2 g 6-Amino-4-hydroxynaphthalin-2-sulfonsäure im vorigen Beispiel als Kupplungskomponenten 32,3 g 1-(2,5-Dichlor-4-sulfophenyl)-3-methyl-5-pyrazolon bzw. 21,1 g 2-Methyl-indol-5-sulfonsäure und verfährt im übrigen analog der im Beispiel angegebenen Arbeitsweise, so erhält man die Farbstoffe der Formel

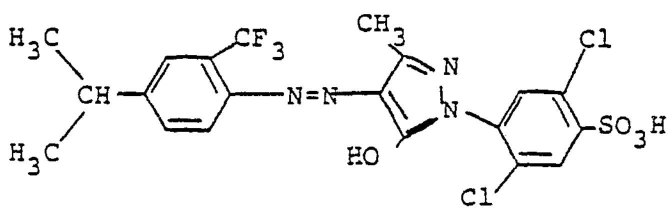

max : 447 nm (gemessen in Dimethylformamid)

bzw. der Formel

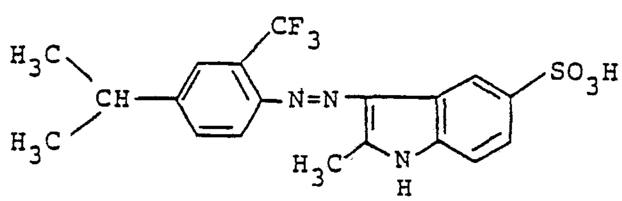

max : 387 nm (gemessen in Dimethylformamid)

in Form gelber Pulver, die Polyamid in grünstichig gelben Tönen färben.

Beispiel 10

0,1 g des nach Beispiel 9 erhaltenen Farbstoffs werden in 100 ml Wasser heiß gelöst. Man setzt 5 ml Ammoniumacetatlösung zu und verdünnt mit kaltem Wasser auf ein Volumen von 500 ml. In dieses Färbebad gibt man 10 g Polyamidfasermaterial, erhitzt innerhalb von 20 Minuten zum Kochen, setzt 4 ml 10 %ige Essigsäure zu und hält 1 Stunde auf Kochtemperatur. Danach wird das gefärbte Polyamid aus dem Färbebad genommen, gründlich mit heißem Wasser gespült und bei 70 bis 80 °C getrocknet. Man erhält eine klare rote Färbung.

Beispiel 11

60 g 1-Amino-2-trifluormethyl-4-isopropylbenzol werden unter Rühren in 300 Tle konz. Schwefelsäure eingetropft, wobei die Temperatur 20 °C nicht übersteigen soll. Anschließend wird auf 0 °C abgekühlt und bei dieser Temperatur wird allmählich eine durch Lösen von 20 Tln. Natriumnitrit in 80 Tln. konz. Schwefelsäure hergestellte Nitrosylschwefelsäure eingetropft. Es wird ca. 2 Std. bei 0 °C nachgerührt. Die so hergestellte Diazoniumsalzlösung wird nun bei 0-5 °C unter gutem Rühren allmählich zu einer Lösung von 58 Tln. 1-(N-Ethyl-N-β-chlorethyl-amino)-3-methyl-benzol in 2 000 Tln. Wasser und 50 Tln. konz. Salzsäure, der man 10 Tle. Amidosulfonsäure zugesetzt hat, gegeben. Die Kupplung setzt sofort ein. Sie kann durch Abpuffern der Lösung auf pH 4-5 mittels Natriumacetats beschleunigt werden. Nach beendeter Kupplung wird der entstandene Azofarbstoff abfiltriert, mit Wasser salzfrei gewaschen und getrocknet. Man erhält 105 g. eines roten Farbstoffs, der in üblicher Weise formiert und auf einen Papierträger gedruckt, sich ausgezeichnet zum Bedrucken von Polyesterfasernmaterialien nach dem Transferdruckprinzip (z. B. 30 sec. bei 200 °C) eignet.

## Patentansprüche

1. Verbindungen der Formel

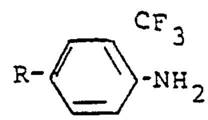

worin

R einen $C_1$-$C_6$-Alkylrest bedeutet.

2. Verbindungen gemäß Anspruch 1, dadurch gekennzeichnet, daß R für $C_3$-$C_4$-Alkyl steht.

3. Verbindung gemäß Anspruch 1, dadurch gekennzeichnet, daß R fur Isopropyl steht.

4. Verfahren zur Herstellung von Verbindungen gemäß Anspruch 1, dadurch gekennzeichnet, daß man entsprechende 3-Alkylbenzotrifluoride in an sich bekannter Weise nitriert und die eingeführte Nitrogruppe reduziert.

5. Verwendung von Verbindung gemäß Anspruch 1 zum Aufbau von Azofarbstoffen.

6. Azofarbstoffe der Formel

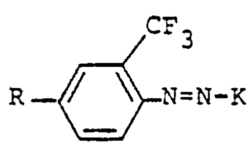

worin K den Rest einer Kupplungskomponente und R einen $C_1$-$C_6$-Alkylrest bedeutet.

7. Azofarbstoffe gemäß Anspruch 6, dadurch gekennzeichnet, daß R für Isopropyl steht.

8. Azofarbstoffe gemäß Anspruch 6 und 7, dadurch gekennzeichnet, daß K für einen Rest der Formel

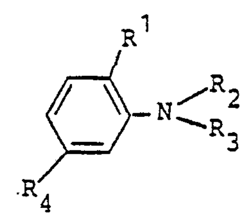 (III)

worin

$R_1$ für H, Cl, $OCH_3$ oder $OC_2H_5$,

$R_2$ für H, $C_2$-$C_4$-Alkyl, Cyanethyl, Chlorethyl, Benzyl oder $C_1$-$C_4$-Alkoxy-$C_2$-$C_4$-alkyl,

$R_3$ für gleiches oder verschiedenes $R_2$ und

$R_4$ für H, $CH_3$, $OCH_3$, $OC_2H_5$, Cl, $CF_3$ und gegebenenfalls $NHCOCH_3$

stehen.

9. Azofarbstoffe gemäß Anspruch 6 und 7, dadurch gekennzeichnet, daß K für einen Rest der Formel

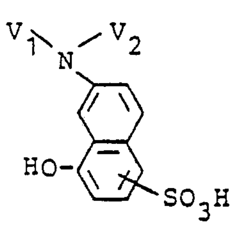 (IVa)

worin

$V_1$ für H, $C_1$-$C_4$-Alkyl, Cyclohexyl, Phenyl-$C_1$-$C_3$-alkyl oder gegebenenfalls durch $C_1$-$C_4$-(O)-Alkyl oder C1 substitutiertes Phenyl und

$V_2$ für H oder $C_1$-$C_4$-Alkyl stehen.

10. Azofarsbstoff gemäß Anspruch 6 der Formel

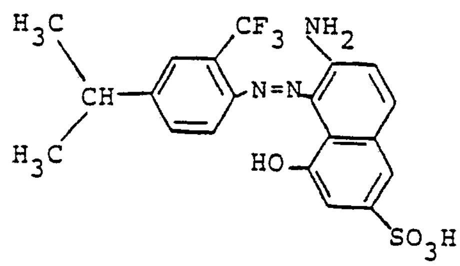

**Claims**

1. Compounds of the formula

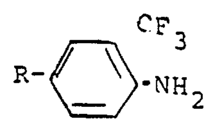

wherein

R denotes a $C_1$-$C_6$-alkyl radical.

2. Compounds according to Claim 1, characterised in that R represents $C_3$-$C_4$-alkyl.

3. Compound according to Claim 1, characterised in that R represents isopropyl.

4. Process for preparing compounds according to Claim 1, characterised in that corresponding 3-alkyl-benzotrifluorides are nitrated in a manner which is in itself known and the nitro group introduced is reduced.

5. Use of compounds according to Claim 1, for building azo dyestuffs.

6. Azo dyestuffs of the formula

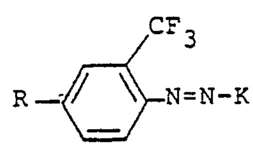

wherein

K denotes the radical of a coupling component and

R denotes a $C_1$-$C_6$-alkyl radical.

7. Azo dyestuffs according to Claim 6, characterised in that R represents isopropyl.

8. Azo dyestuffs according to Claim 6 and 7, characterised in that K represents a radical of the formula

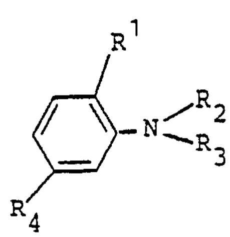

(III)

wherein

$R_1$ represents H, Cl, $OCH_3$ or $OC_2H_5$,

$R_2$ represents H, $C_2$-$H_4$-alkyl, cyanoethyl, chloroethyl, benzyl or $C_1$-$C_4$-alkoxy-$C_2$-$C_4$-alkyl,

$R_3$ represents identical or different $R_2$ and

$R_4$ represents H, $CH_3$, $OCH_3$, $OC_2H_5$, Cl, $CF_3$ or, if appropriate, $NHCOCH_3$.

9. Azo dyestuffs according to Claim 6 and 7, characterised in that K represents a radical of the formula

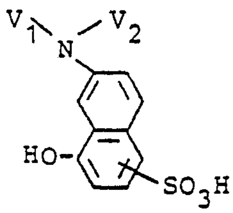

(IVa)

wherein

$V_1$ represents H, $C_1$-$C_4$-alkyl, cyclohexyl, phenyl-$C_1$-$C_3$-alkyl or phenyl optionally substituted by $C_1$-$C_4$-(O)-alkyl or C1 and

$V_2$ represents H or $C_1$-$C_4$-alkyl.

10. Azo dyestuff according to Claim 6, of the formula

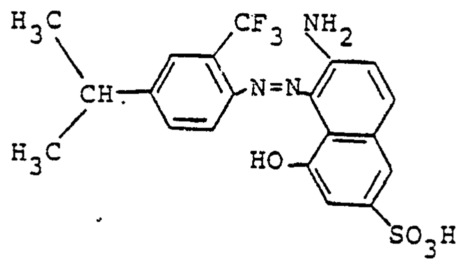

**Revendications**

1. Composés de formule

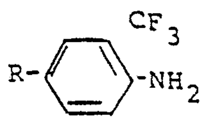

dans laquelle

R représente un reste alkyle en $C_1$-$C_6$.

2. Composés selon la revendication 1, caractérisés en ce que R représente un groupe alkyle en $C_3$-$C_4$.

3. Composé selon la revendication 1, caractérisé en ce que R représente le groupe isopropyle.

4. Procédé pour la fabrication de composés selon la revendication 1, caractérisé en ce que l'on nitre les fluorures de 3-alkylbenzényles correspondants de manière connue et l'on réduit le groupe nitro introduit.

5. Utilisation de composés selon la revendication 1 pour la fabrication de colorants azoïques.

6. Colorants azoïques de formule

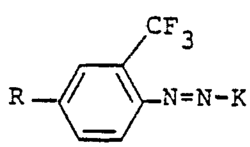

dans laquelle

K représente le reste d'un composant de copulation et

R représente un reste alkyle en $C_1$-$C_6$.

7. Colorants azoïques selon la revendication 6, caractérisés en ce que R représente le reste isopropyle.

8. Colorants azoïques selon la revendication 6 ou 7, caractérisés en ce que K représente un reste de formule

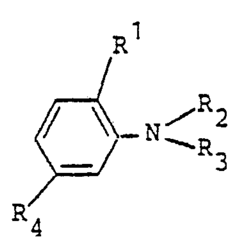

(III)

dans laquelle

$R_1$ représente H, Cl, $OCH_3$ ou $C_2H_5$

$R_2$ représente H, alkyle en $C_2$-$C_4$, cyanoéthyle, chloroéthyle, benzyle ou (alcoxy en $C_2$-$C_4$)-alkyle en $C_2$-$C_4$,

$R_3$ représente un reste $R_2$ identique ou différent et

$R_4$ représente H, $CH_3$, $OCH_3$, $OC_2H_5$, C1, $CF_3$ et éventuellement $NHCOCH_3$.

9. Colorants azoïques selon la revendication 6 ou 7, caractérisés en ce que K représente un reste de formule

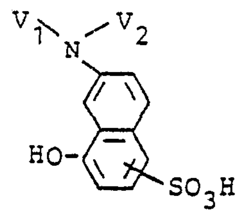

(IVa)

dans laquelle

$V_1$ représente H, alkyle en $C_1$-$C_4$, cycloalkyle, phényl-alkyle en $C_1$-$C_3$ ou phényle éventuellement substitué par (O)-alkyle en $C_2$-$C_4$ ou C1 et

$V_2$ représente H ou alkyle en $C_1$-$C_4$.

10. Colorants azoïques selon la revendication 6, de formule